# EUROPÄISCHE PATENTSCHRIFT

(11) **EP 1 234 730 B1**
(45) Veröffentlichungstag und Bekanntmachung des Hinweises auf die Patenterteilung: **19.04.2006**
(21) Anmeldenummer: 02003185.2
(22) Anmeldetag: 18.02.2002
(51) Int. Cl.: B60T 7/06, B60R 21/09, G05G 1/14

(54) **Pedalwerk für ein Kraftfahrzeug**
Pedal arrangement for a motor vehicle
Agencement d'une pédale pour un véhicule automobile

(30) Priorität: 23.02.2001 DE 20103248 U
(43) Veröffentlichungstag der Anmeldung: 28.08.2002
(73) Patentinhaber: ADAM OPEL AG, 65423 Rüsselsheim (DE)
(72) Erfinder: Huber, Michael, Dipl.-Ing., 85049 Ingolstadt (DE)

(56) Entgegenhaltungen:
- EP-A- 0 805 080
- US-A- 6 089 119

## Beschreibung

Die Erfindung bezieht sich auf ein Pedalwerk für ein Kraftfahrzeug, insbesondere Brems- oder Kupplungspedalwerk, mit einem Pedalbock zur schwenkbaren Lagerung eines Pedals, der einerseits an einer Stirnwand im Fußraum und andererseits zu einem karosseriefesten Bauteil beabstandet angeordnet ist, und mit einer das Pedal bei einem Fahrzeugaufprall in Richtung der Stirnwand verschwenkenden Pedalstütze.

Die EP 0 659 615 B1 offenbart ein Pedalwerk für ein Kraftfahrzeug, insbesondere ein Brems- oder Kupplungspedalwerk, mit einer Pedalstrebe, die zwei zueinander angeordnete Strebenschenkel sowie ein zwischen den beiden Strebenschenkeln schwenkbar gelagertes Pedal aufweist. An dem Pedal greift beabstandet zur Pedalschwenkachse ein Betätigungselement, insbesondere ein Brems- oder Kupplungselement, an. Eine Pedalachse ist mit ihren beiden Enden in zur Pedalachse hin offene Achslager eingesetzt und die Pedalstrebe ist im Bereich ihrer beiden Enden mit Aufnahmen zum Befestigen des Pedalwerks zwischen stationären Bauteilen des Kraftfahrzeugs versehen. Jeder Strebenschenkel weist einen Umformbereich auf und die mit den Strebenschenkeln verbundenen Achslager gelangen beim Überschreiten einer über mindestens eines der stationären Bauteile in die Pedalstrebe eingeleiteten Kraft außer Eingriff mit der Pedalachse. Nach einem Aufprallunfall liegt das Pedal frei in einem Fußraum des Kraftfahrzeuges, wo es von anderen Aggregaten sowie Blechteilen eingeklemmt oder unkontrolliert bewegt werden kann.

Im Weiteren ist aus der DE 197 31 644 C1 ein Kraftfahrzeug mit zwei Vorbaulängsträgern bekannt, die in einem Anbindungsbereich kraftübertragend mit einer deformierbaren Stirnwand verbunden sind. Die Stirnwand erstreckt sich von einem deformationssteifen Brüstungsträger unterhalb einer Windschutzscheibe bis in einen Fußraum eines Fahrgastraumes nach unten. Darüberhinaus ist eine Pedalanordnung vorgesehen, deren Pedale mittels wenigstens eines Pedalbocks schwenkbeweglich gelagert sind, wobei der Pedalbock oberhalb des Anbindungsbereiches der Vorbaulängsträger stirnwandseitig festgelegt ist. Wenigstens ein Pedal ist mit einem in Fahrtrichtung gesehen nach hinten abragenden Stützfortsatz versehen, der derart mit einer korrespondierenden Abgleitfläche an einem mit Abstand hinter dem Pedalbock angeordneten, karosseriefesten Querträger in Wirkverbindung steht, dass bei einer Deformation der Stirnwand und einer daraus resultierenden Kippbewegung des Pedalbocks die Pedale eine gegensinnige Schwenkbewegung an dem Pedalbock durchführen.

Ferner offenbart die DE 39 04 616 C2 eine Anordnung zur Lagerung mindestens eines hängend angeordneten Pedals, insbesondere des Bremspedals, an einer Stirnwand eines Kraftfahrzeugs mittels eines Pedalbocks. Der Pedalbock ist in einem solchen Abschnitt der Stirnwand befestigt, der bei einem Frontalaufprall des Kraftfahrzeugs zum Fahrgastraum hin verformt wird, wobei die Anordnung derart ausgebildet ist, dass dabei das Pedal im Wesentlichen keine Bewegung in einen Fußraum eines Fahrgastraumes hinein ausführt, sondern dass dessen freies Ende etwas vom Fahrer fortgeschwenkt wird. Im Fußraum ist beabstandet zum Pedalbock und in etwa in gleicher Höhe mit diesem ein quer verlaufender, im Wesentlichen biegesteifer Montageträger angeordnet. Der Montageträger dient als Abstützung für Auslenk- oder Abweisvorrichtungen, die zumindest während eines Frontalaufpralls derart mit der Pedalbock-Pedal-Einheit in Wirkverbindung gelangen, dass deren durch den Frontalaufprall bewirkten, in den Fußraum gerichteten translatorischen Bewegung eine das Pedal von Fahrer fortbewegende rotatorische Bewegung überlagert wird. Diese Anordnung benötigt relativ viel Platz im Fußraum, der oftmals nicht zur Verfügung steht.
Ein gattungsgemäßes Pedalwerk ist aus dem Dokument US 60 89 119 A bekannt.

Es ist Aufgabe der Erfindung, ein Pedalwerk der eingangs genannten Art zu schaffen, mit dem bei einem starken Fahrzeugaufprall eine Verletzung der unteren Extremitäten des Fahrers durch eine Verlagerung des Pedals weitgehend ausgeschlossen ist und das darüber hinaus relativ kostengünstig zu fertigen ist.

Erfindungsgemäß wird die Aufgabe dadurch gelöst, dass die Pedalstütze an der dem Bauteil benachbarten Seite des Pedalbocks mit Abstand zu diesem derart festgelegt ist, dass die Pedalstütze sich in Richtung des Pedals erstreckt und bei einem Fahrzeugaufprall durch Auftreffen auf das Bauteil eine Schwenkbewegung in Richtung der Stirnwand erfährt, die sich gleichgerichtet auf das Pedal überträgt.

Aufgrund dieser Maßnahmen ist es möglich, einem bereits vorhandenen Pedal eine zusätzliche Pedalstütze zuzuordnen, die eine Zwangsverlagerung des Pedals in Richtung der Stirnwand des Kraftfahrzeuges bei einem starken Fahrzeugaufprall sicherstellt und so die Verletzungsgefahr der unteren Extremitäten des Fahrers wesentlich verringert. Durch die Beabstandung der Pedalstütze zu dem karosseriefesten Bauteil setzt die Schwenkbewegung derselben und somit auch die des Pedals erst dann ein, wenn die Pedalstütze das Bauteil erreicht. Dies geschieht erst ab einer bestimmten Stärke des Fahrzeugaufpralls, mit der auch die Verletzungsgefahr des Fahrers steigt. Da die Zwangsverschwenkung der Pedalstütze und des Pedals in Richtung der Stirnwand mit einer zum Austausch des Pedalbocks und des Pedals führenden Beschädigung einhergehen kann, ist eine solche Beschädigung jedenfalls bis zu einer bestimmten Stärke des Fahrzeugaufpralls aufgrund der Beabstandung der Pedalstütze zu dem karosseriefesten Bauteil ausgeschlossen.

Zweckmäßigerweise umfasst der Pedalbock im Wesentlichen zwei Seitenwangen, die zur Befestigung an der Stirnwand jeweils einen Flanschbereich aufweisen, der in einen zur Stirnwand ausgerichteten oberen und einen dem entgegengesetzten unteren Bereich übergeht, wobei der obere und der untere Bereich jeder Seitenwange zumindest durch ein zu dem Bauteil ausgerichtetes Verbindungsstück verbunden sind. Die Seitenwangen können beispielsweise als Tiefziehteile gefertigt werden und der Pedalbock weist nach der Befestigung der beiden Seitenwangen an der Stirnwand eine stabile Konstruktion auf.

Um ein günstiges Kraft-Weg-Verhältnis zu erzielen, ist vorteilhafterweise das Pedal in unmittelbarer Nähe des unteren Bereichs zwischen den Seitenwangen schwenkbar gelagert ist. Die Montage des Pedals lässt sich aufgrund der Konstruktion des Pedalbocks relativ leicht bewerkstelligen.

Zur Bereitstellung einer sicheren Halterung weist bevorzugt zumindest die erste Seitenwange an ihrem Verbindungsstück eine Aufnahme für die Pedalstütze auf.

Nach einer vorteilhaften Ausgestaltung der Erfindung ist die Pedalstütze stumpfwinklig ausgeführt, wobei der eine Schenkel der Pedalstütze in der Aufnahme der ersten Seitenwange des Pedalbocks befestigt ist und der andere Schenkel einen pedalbocknahen Bereich des Pedals übergreift. Sonach ist zur Anordnung der Pedalstütze lediglich ein relativ geringer Platzbedarf innerhalb des Fußraums notwendig und die Pedalstütze selbst wirkt nicht störend.

Um eine Geräuschentwicklung durch eine unkontrollierte Bewegung der Pedalstütze zu vermeiden, ist vorteilhafterweise die Pedalstütze.an einem oberen Befestigungspunkt in der Nähe des oberen Bereichs der Seitenwangen des Pedalbocks und an einem unteren Befestigungspunkt in der Nähe des unteren Bereichs der Seitenwangen in der Aufnahme festgelegt ist. Aufgrund dieser Zweipunktbefestigung ist ein Klappern der Pedalstütze ausgeschlossen.

Zweckmäßigerweise ist die Pedalstütze sowohl an dem oberen als auch an dem unteren Befestigungspunkt mit der flanschförmigen Aufnahme verschraubt, vernietet oder verschweißt. Die Pedalstütze ist somit durch einen relativ geringen Arbeitsaufwand an der Aufnahme zu befestigen, wobei die nicht abschließend aufgezählten Verbindungstechniken den bei einem Fahrzeugaufprall herrschenden Kräften wirksam standhalten.

Nach einer Weiterbildung des Erfindungsgedankens trifft die Pedalstütze bei einem Fahrzeugaufprall im Bereich des unteren Befestigungspunktes auf das karosseriefeste Bauteil auf, wobei zumindest die erste Seitenwange des Pedalbocks in diesem Bereich eine geringere Festigkeit aufweist als im Bereich des oberen Befestigungspunktes der Pedalstütze. Somit erfolgt die Schwenkbewegung der Pedalstütze und die des Pedals in Richtung der Stirnwand aufgrund der Nachgiebigkeit der Seitenwange, ohne dass der Pedalbock selbst schwenkbar gelagert sein muss. Bei einem Fahrzeugaufprall wirkt die höchste Kraft aufgrund des Auftreffens des unteren Befestigungspunktes der Pedalstütze auf das karosseriefeste Bauteil in dem Bereich, in dem zumindest die erste Seitenwange einen geringeren Widerstand gegen Verformung aufweist, weshalb die Pedalstütze um den oberen Befestigungspunkt verschwenkt. Selbstverständlich ist es möglich beide Seitenwangen nachgiebig zu gestalten.

Bevorzugt ist der obere Bereich zumindest der ersten Seitenwange biegesteifer als der untere Bereich ausgeführt. Hierbei kann einerseits der obere Bereich beispielsweise Soll-Verformungszonen aufweisen, in denen sich die Seitenwange verbiegt oder einknickt oder andererseits der obere Bereich eine Versteifung durch eine entsprechende Formgebung erhalten.

Um ein gezieltes Verschwenken des Pedals sicherzustellen, weist vorzugsweise die Pedalstütze im Bereich ihres freien Endes eine zu dem unbetätigten Pedal beabstandete Betätigungsnase sowie zwei zueinander beabstandete Führungsansätze auf, wobei das Pedal beim Verschwenken aufgrund eines Fahrzeugaufpralls zwischen den Führungsansätzen einliegt. Durch die linienförmige Auflage der Betätigungsnase werden unnötige Reibungskräfte zwischen dem Pedal und der Pedalstütze vermieden. Im Weiteren stellt die Anordnung der Betätigungsnase im Bereich des freien Endes der Pedalstütze ein relativ großes Drehmoment sicher. Darüberhinaus ist eine unkontrollierte seitliche Bewegung des Pedals aufgrund der das Verschwenkende Pedal führenden Führungsansätze nahezu ausgeschlossen.

Nach einer weiteren Ausgestaltung der Erfindung ist das karosseriefeste Bauteil eine einer Lenksäule zugeordnete Motor-Getriebe-Einheit einer Servolenkung oder ein an der Lenksäule befestigtes Bauteil und das Pedal ein Bremspedal ist, wobei der Pedalbock unter Zwischenordnung der Stirnwand an einem Bremskraftverstärker befestigt ist. Um das Bremspedal mittels der Pedalstütze bei einem Fahrzeugaufprall zwangsweise zu verschwenken, ist es nicht erforderlich ein zusätzliches karosseriefestes Bauteil im Fußraum zu befestigen, da das Bremspedal im Bereich der der Lenksäule zugeordneten Motor-Getriebe-Einheit angeordnet und somit ein unmittelbares Zusammenwirken zwischen der Motor-Getriebe-Einheit und der Pedalstütze für das Bremspedal gewährleistet ist.

Zweckmäßigerweise greift die Betätigungsnase der Pedalstütze bei einem Fahrzeugaufprall unterhalb eines Bereiches, in dem der Bremskraftverstärker im Flanschbereich an den Seitenwangen befestigt ist, an dem Pedal an. Aufgrund dieser Maßnahme ist das Verschwenken des Pedals mittels der Pedalstütze in Richtung des Bremskraftverstärkers oder der Stirnwand bei einer durch die herrschenden Hebelverhältnisse relativ günstigen Kraftübertragung sichergestellt.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen näher erläutert. Es zeigen:

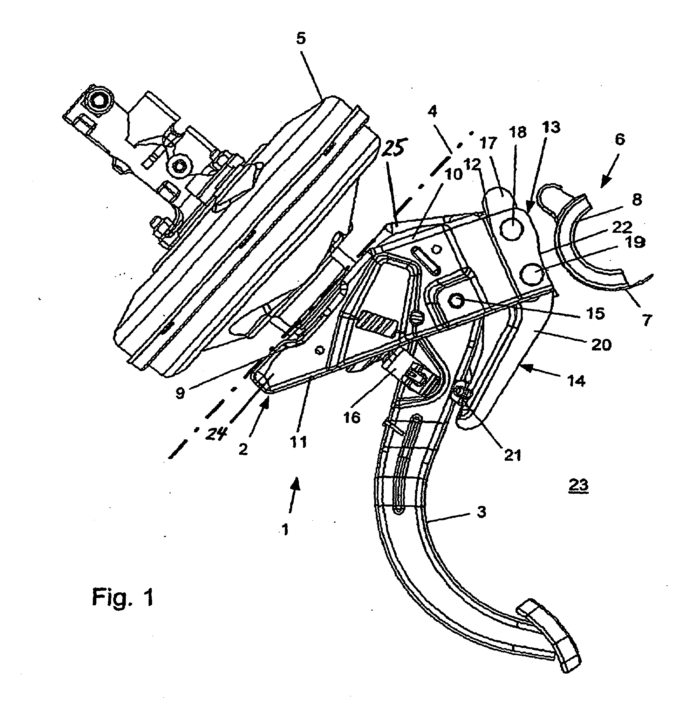

- Fig. 1: eine Darstellung eines erfindungsgemäßen Pedalwerks in einer Einbaustellung und

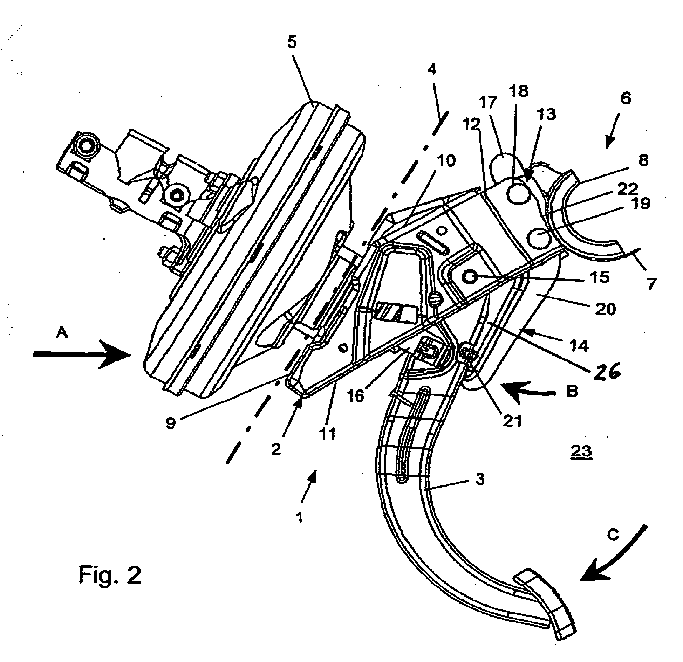

- Fig. 2: eine Darstellung des Pedalwerks gemäß Fig. 1 nach einem Fahrzeugaufprall.

Ein als Bremspedalwerk 1 ausgebildetes Pedalwerk umfasst einen Pedalbock 2 zur schwenkbaren Lagerung eines Pedals 3, der unter Zwischenordnung einer Stirnwand 4 mit einem Bremskraftverstärker 5 in Verbindung steht und zu einem karosseriefesten Bauteil 6, nämlich einer einer Lenksäule 8 zugeordneten Motor-Getriebe-Einheit 7 einer Servolenkung, beabstandet angeordnet ist.

Der Pedalbock 2 umfasst im Wesentlichen zwei Seitenwangen 24, 25, die zur Befestigung an dem Bremskraftverstärker 5 bzw. der Stirnwand 4 jeweils einen Flanschbereich 9 aufweisen, der in einen zur Stirnwand 4 kraftverstärker 5 bzw. der Stirnwand 4 jeweils einen Flanschbereich 9 aufweisen, der in einen zur Stirnwand 4 ausgerichteten oberen 10 und einen dem entgegengesetzten unteren Bereich 11 übergeht. Der obere Bereich 10 und der untere Bereich 11 jeder Seitenwange 24, 25 sind über ein Verbindungsstück 12 miteinander verbunden. Das Verbindungsstück 12 zumindest der ersten Seitenwange 24 ist in Richtung der Lenksäule 8 bzw. der Motor-Getriebe-Einheit 7 ausgerichtet und weist eine Aufnahme 13 für eine Pedalstütze 14 auf.

Das als Bremspedal ausgebildete Pedal 3 ist in unmittelbarer Nähe des unteren Bereichs 11 mittels einer Schwenkachse 15 zwischen den Seitenwangen 24, 25 in dem Bremspedalbock 2 gelagert und steht über eine Kolbenstange 16 mit dem Bremskraftverstärker 5 in Wirkverbindung.

Die Pedalstütze 14 ist im Wesentlichen stumpfwinklig ausgeführt, wobei ihr einer Schenkel 17 an einem oberen 18 und einem unteren Befestigungspunkt 19 in der Aufnahme 13 verschraubt ist und ihr anderer Schenkel 20 einen pedalbocknahen Bereich des Pedals 3 übergreift. Der dem Pedal 3 zugeordnete Schenkel 20 der Pedalstütze 14 weist an seinem freien Ende eine Betätigungsnase 21 auf, die in der unbeaufschlagten Stellung des Pedals 3 zu dem Bereich des Pedals 3 beabstandet ist, in dem die Kolbenstange 16 an dem Pedal 3 angelenkt ist. Die Betätigungsnase 21 befindet sich unterhalb des Bereichs, in dem der Bremskraftverstärker 5 an den Seitenwangen 24, 25 des Pedalbocks 2 befestigt ist. Der in der Aufnahme 13 der ersten Seitenwange 24 des Pedalbocks 2 festgelegte Schenkel 17 der Pedalstütze 14 sowie eine freie Längsseite 22 der Aufnahme 13 sind beabstandet zur Lenksäule 8 angeordnet.

Bei einem Fahrzeugaufprall wird der Bremskraftverstärker 5 mitsamt der Stirnwand 4 und dem Pedalbock 2 in Richtung des Pfeils A in einen Fußraum 23 des Kraftfahrzeugs verschoben. Nach dem Zurücklegen einer durch die Beabstandung der Aufnahme 13 zu der Motor-Getriebe-Einheit 7 vorgegebenen Wegstrecke trifft die Aufnahme 13 im Bereich des unteren Befestigungspunktes 19 der Pedalstütze 14 auf das karosseriefeste Bauteil 6 auf. Dadurch, dass zumindest die erste Seitenwange 24 des Pedalbocks 2 im Bereich des unteren Befestigungspunktes 19 eine geringere Festigkeit als im Bereich des oberen Befestigungspunktes 18 der Pedalstütze 14 aufweist, gibt der Pedalbock 2 unterhalb des unteren Befestigungspunktes 19 nach und die Pedalstütze 14 erfährt aufgrund der Aufprallkraft eine Schwenkbewegung gemäß Pfeil B in Richtung der Stirnwand 4. Diese Schwenkbewegung überträgt die Pedalstütze 14 über die dann auf dem Pedal 3 aufliegende Betätigungsnase 21 des Schenkels 20 auf das Pedal 3, das somit ebenfalls eine Schwenkbewegung in Richtung der Stirnwand 4 gemäß Pfeil C ausführt. Somit wird bei einem Fahrzeugaufprall, der zum Auftreffen der Pedalstütze 14 auf die Motor-Getriebe-Einheit 7 der Lenksäule 8 führt, das Pedal 3 aus dem Fußraum 23 in Richtung der Stirnwand 4 verschwenkt, womit eine Verletzungsgefahr der unteren Extremitäten eines Fahrers wesentlich verringert ist. Durch zwei gegenüberliegende Führungsansätze 26 der Pedalstütze 14, die im Bereich des freien Endes des Schenkels 20 der das Pedal 3 übergreift an der Pedalstütze 14 angeordnet sind, ist eine unkontrollierte seitwärts gerichtete Bewegung des Pedals 3, bei dessen Verschwenkung durch einen Fahrzeugaufprall, ausgeschlossen.

### Bezugszeichenliste

- 1.: Bremspedalwerk
- 2.: Pedalbock
- 3.: Pedal
- 4.: Stirnwand
- 5.: Bremskraftverstärker
- 6.: karosseriefestes Bauteil
- 7.: Motor-Getriebe-Einheit
- 8.: Lenksäule
- 9.: Flanschbereich
- 10.: oberer Bereich
- 11.: unterer Bereich
- 12.: Verbindungsstück
- 13.: Aufnahme
- 14.: Pedalstütze
- 15.: Schwenkachse
- 16.: Kolbenstange
- 17.: Schenkel
- 18.: oberer Befestigungspunkt
- 19.: unterer Befestigungspunkt
- 20.: Schenkel
- 21.: Betätigungsnase
- 22.: Längsseite von 13
- 23.: Fußraum
- 24.: erste Seitenwange
- 25.: zweite Seitenwange
- 26.: Führungsansatz

- A: Pfeil
- B: Pfeil
- C: Pfeil

## Patentansprüche

1. Pedalwerk für ein Kraftfahrzeug, insbesondere Brems-(1) oder Kupplungspedalwerk, mit einem Pedalbock (2) zur schwenkbaren Lagerung eines Pedals (3), der einerseits an einer Stirnwand (4) im Fußraum (23) und andererseits zu einem karosseriefesten Bauteil (6) beabstandet angeordnet ist, und mit einer das Pedal (3) bei einem Fahrzeugaufprall in Richtung der Stirnwand (4) verschwenkenden Pedalstütze (14), **dadurch gekennzeichnet, dass** die Pedalstütze (14) an der dem Bauteil (6) benachbarten Seite des Pedalbocks (2) mit Abstand zu dem Bauteil derart festgelegt ist, dass die Pedalstütze (14) sich in Richtung des Pedals (3) erstreckt und bei einem Fahrzeugaufprall erst durch Auftreffen auf das Bauteil (6) eine Schwenkbewegung (B) in Richtung der Stirnwand (4) erfährt, die sich gleichgerichtet auf das Pedal (3) überträgt.

2. Pedalwerk nach Anspruch 1, **dadurch gekennzeichnet, dass** der Pedalbock (2) im Wesentlichen zwei Seitenwangen (24, 25) umfasst, die zur Befestigung an der Stirnwand (4) jeweils einen Flanschbereich (9) aufweisen, der in einen zur Stirnwand (4) ausgerichteten oberen (10) und einen dem entgegengesetzten unteren Bereich (11) übergeht, wobei der obere (10) und der untere Bereich (11) jeder Seitenwange (24, 25) zumindest durch ein zu dem Bauteil (6) ausgerichtetes Verbindungsstück (12) verbunden sind.

3. Pedalwerk nach Anspruch 2, **dadurch gekennzeichnet, dass** das Pedal (3) in unmittelbarer Nähe des unteren Bereichs (11) zwischen den Seitenwangen (24, 25) schwenkbar gelagert ist.

4. Pedalwerk nach Anspruch 2 oder 3, **dadurch gekennzeichnet, dass** zumindest die erste Seitenwange (24) an ihrem Verbindungsstück (12) eine Aufnahme (13) für die Pedalstütze (14) aufweist.

5. Pedalwerk nach einem der Ansprüche 1 bis 4, **dadurch gekennzeichnet, dass** die Pedalstütze (14) stumpfwinklig ausgeführt ist, wobei der eine Schenkel (17) der Pedalstütze (14) in der Aufnahme (13) der ersten Seitenwange (24) des Pedalbocks (2) befestigt ist und der andere Schenkel (20) einen pedalbocknahen Bereich des Pedals (3) übergreift.

6. Pedalwerk nach Anspruch 5, **dadurch gekennzeichnet, dass** die Pedalstütze (14) an einem oberen Befestigungspunkt (18) in der Nähe des oberen Bereichs (10) der Seitenwangen (24, 25) des Pedalbocks (2) und an einem unteren Befestigungspunkt (19) in der Nähe des unteren Bereichs (11) der Seitenwangen (24, 25) in der Aufnahme (13) festgelegt ist.

7. Pedalwerk nach Anspruch 6, **dadurch gekennzeichnet, dass** die Pedalstütze (14) sowohl an dem oberen (18) als auch an dem unteren Befestigungspunkt (19) mit der flanschförmigen Aufnahme (13) verschraubt, vernietet oder verschweißt ist.

8. Pedalwerk nach einem der Ansprüche 1 bis 7, **dadurch gekennzeichnet, dass** die Pedalstütze (14) bei einem Fahrzeugaufprall im Bereich des unteren Befestigungspunktes (19) auf das karosseriefeste Bauteil (6) auftrifft, wobei zumindest die erste Seitenwange (24) des Pedalbocks (2) in diesem Bereich eine geringere Festigkeit aufweist als im Bereich des oberen Befestigungspunktes (18) der Pedalstütze (14).

9. Pedalwerk nach einem der Ansprüche 2 bis 8, **dadurch gekennzeichnet, dass** der obere Bereich (10) zumindest der ersten Seitenwange (24) biegesteifer als der untere Bereich (11) ausgeführt ist.

10. Pedalwerk nach einem der Ansprüche 1 bis 9, **dadurch gekennzeichnet, dass** die Pedalstütze (14) im Bereich ihres freien Endes eine zu dem unbetätigten Pedal (3) beabstandete Betätigungsnase (21) sowie zwei zueinander beabstandete Führungsansätze (26) aufweist, wobei das Pedal (3) beim Verschwenken aufgrund eines Fahrzeugaufpralls zwischen den Führungsansätzen (26) einliegt.

11. Anordnung mit einem Pedalwerk nach einem der Ansprüche 1 bis 10, **dadurch gekennzeichnet, dass** das karosseriefeste Bauteil (6) eine einer Lenksäule (8) zugeordnete Motor-Getriebe-Einheit (7) einer Servolenkung oder ein an der Lenksäule (8) befestigtes Bauteil und das Pedal (3) ein Bremspedal ist, wobei der Pedalbock (2) unter Zwischenordnung der Stirnwand (4) an einem Bremskraftverstärker (5) befestigt ist.

12. Anordnung nach Anspruch 11, **dadurch gekennzeichnet, dass** die Betätigungsnase (21) der Pedalstütze (14) bei einem Fahrzeugaufprall unterhalb eines Bereiches, in dem der Bremskraftverstärker (5) im Flanschbereich (9) an den Seitenwangen (24, 25) befestigt ist, an dem Pedal (3) angreift.

## Claims

1. A pedal arrangement for a motor vehicle, in particular a brake (1) or a clutch pedal arrangement, including a pedal bracket (2) for the pivotal mounting of a pedal (3) which is arranged on a front wall (4) of the footwell (23) on the one hand and is spaced relative to a component fixed to the bodywork (6) on the other, and including a pedal support (14) for pivoting the pedal (3) toward the front wall (4) in the event of a vehicle impact, **characterized in that** the pedal support (14) is fixed at a spacing from the component on the side of the pedal bracket (2) neighbouring the component (6) in such a manner that the pedal support (14) extends toward the pedal (3) and, in the event of a vehicle impact, experiences a pivotal movement (B) toward the front wall (4) only due to impingement on the component (6), said movement being transmitted in the same direction to the pedal (3).

2. A pedal arrangement in accordance with Claim 1, **characterized in that** the pedal bracket (2) comprises essentially two side cheeks (24, 25) each of which has a flange portion (9) for attachment to the front wall (4), said flange portion which merges into an upper portion (10) which is aligned with the front wall (4) and into an opposing lower portion (11), wherein the upper (10) and the lower portion (11) of each side cheek (24, 25) are connected by at least one connecting piece (12) which is aligned with the component (6).

3. A pedal arrangement in accordance with Claim 2, **characterized in that** the pedal (3) is mounted in pivotal manner between the side cheeks (24, 25) in the direct proximity of the lower portion (11).

4. A pedal arrangement in accordance with Claim 2 or 3, **characterized in that** the connecting piece (12) of at least the first side cheek (24) comprises a seating (13) for the pedal support (14).

5. A pedal arrangement in accordance with any of the Claims 1 to 4, **characterized in that** the pedal support (14) is in the shape of an obtuse angle, whereby the one arm (17) of the pedal support (14) is fixed in the seating (13) of the first side cheek (24) of the pedal bracket (2) and the other arm (20) extends over a part of the pedal (3) near the pedal bracket.

6. A pedal arrangement in accordance with Claim 5, **characterized in that** the pedal support (14) is fixed in the seating (13) at an upper fixing point (18) in the proximity of the upper portion (10) of the side cheeks (24, 25) of the pedal bracket (2) and at a lower fixing point (19) in the proximity of the lower portion (11) of the side cheeks (24, 25).

7. A pedal arrangement in accordance with Claim 6, **characterized in that** the pedal support (14) is screwed, riveted or welded to the flange-like seating (13) at both the upper (18) and the lower fixing point (19).

8. A pedal arrangement in accordance with any of the Claims 1 to 7, **characterized in that** in the event of a vehicle impact a part of the pedal support (14) in the vicinity of the lower fixing point (19) strikes the component fixed to the bodywork (6), wherein at least the first side cheek (24) of the pedal bracket (2) in this region is less sturdy than in the region of the upper fixing point (18) of the pedal support (14).

9. A pedal arrangement in accordance with any of the Claims 2 to 8, **characterized in that** the upper portion (10) of at least the first side cheek (24) has a greater bending resistance than the lower portion (11).

10. A pedal arrangement in accordance with any of the Claims 1 to 9, **characterized in that** the free end portion of the pedal support (14) comprises an actuating nose (21) which is spaced from the pedal (3) in the non-actuated state thereof and also two mutually spaced guide pieces (26), wherein the pedal (3) lies between the guide pieces (26) during the pivoting movement resulting from a vehicle impact.

11. An arrangement including a pedal arrangement in accordance with any of the Claims 1 to 10, **characterized in that** the component fixed to the bodywork (6) is a motor-gear unit (7) of a power steering system associated with a steering column (8) or a component fixed to the steering column (8) and the pedal (3) is a brake pedal, whereby the pedal bracket (2) is fixed to a brake servo-assistance unit (5) through the intermediary of the front wall (4).

12. An arrangement in accordance with Claim 11, **characterized in that**, in the event of a vehicle impact, the actuating nose (21) of the pedal support (14) engages the pedal (3) below a region in which the brake servo-assistance unit (5) is fixed to the side cheeks (24, 25) in the flange portion (9).

## Revendications

1. Agencement de pédale pour un véhicule automobile, en particulier agencement de pédale de frein (1) ou d'embrayage, avec un bloc de pédale (2) devant servir de montage en palier pivotant à une pédale (3), bloc de pédale, d'une part, disposé sur une paroi frontale (4) dans l'espace réservé aux pieds (23) et, d'autre part, espacé d'un composant (6) solidaire avec la carrosserie, et avec un appui de pédale (14) faisant pivoter la pédale (3) dans la direction de la paroi frontale (4) dans le cas d'un impact infligé au véhicule, **caractérisé en ce que** l'appui de pédale (14) est fixé sur la face, voisine du composant (6), du bloc de pédale (2), à distance du composant, **en ce que** l'appui de pédale (14) s'étend dans la direction de la pédale (3) et, dans le cas d'un impact infligé au véhicule, ensuite, par arrivée sur le composant (6), subit un mouvement pivotant (B) dans la direction de la paroi frontale (4), qui se transmet, dans le même sens, à la pédale (3).

2. Agencement de pédale selon la revendication 1, **caractérisé en ce que** le bloc de pédale (3) comprend essentiellement deux joues latérales (24, 25), présentant, pour la fixation sur la paroi frontale (4), chacune une zone de bride (9), se transformant en une zone supérieure (10), orientée par rapport à la paroi frontale (4), et une zone inférieure (11) opposée, la zone supérieure (10) et la zone inférieure (11) de chaque joue latérale (24, 25) étant reliées au moins par une pièce de liaison (12) orientée vers le composant (6).

3. Agencement de pédale selon la revendication 2, **caractérisé en ce que** la pédale (3) est montée à pivotement, à proximité immédiate de la zone inférieure (11), entre les joues latérales (24, 25).

4. Agencement selon la revendication 2 ou 3, **caractérisé en ce qu'**au moins la première joue latérale (24) présente, sur sa pièce de liaison (12), un logement (13) pour l'appui de pédale (14).

5. Agencement selon l'une des revendications 1 à 4, **caractérisé en ce que** l'appui de pédale (14) est orientée sous un angle obtus, une branche (17) de l'appui de pédale (14) étant fixée dans le logement (13) de la première joue latérale (24) du bloc de pédale (2) et l'autre branche (20) entourant une zone, proche du bloc de pédale, de la pédale (3).

6. Agencement selon la revendication 5, **caractérisée en ce que** l'appui de pédale (14) est fixé sur un point de fixation supérieur (18), à proximité de la zone supérieure (10) des joues latérales (24, 25) du bloc de pédale (2), et est fixée sur un point de fixation inférieur (19), à proximité de la zone inférieure (11) des parois latérales (24, 25) dans le logement (13).

7. Agencement de pédale selon la revendication 6, **caractérisé en ce que** l'appui de pédale (14) est vissé, riveté ou soudé au logement (13) en forme de bride, tant sur le point de fixation supérieur (18), qu'également sur le point de fixation inférieur (19).

8. Agencement de pédale selon l'une des revendications 1 à 7, **caractérisé en ce que** l'appui de pédale (14), en cas d'impact infligé au véhicule, touche, dans la zone du point de fixation inférieur (19), le composant solidaire avec la carrosserie, sachant qu'au moins la première joue latérale (24) du bloc de pédale (2) présente, dans cette zone, une résistance plus faible que dans la zone du point de fixation supérieure (18) de l'appui de pédale (14).

9. Agencement de pédale selon l'une des revendications 2 à 8, **caractérisé en ce que** la zone supérieure (10), au moins de la première joue latérale (24) est plus rigide en flexion que la zone inférieure (11).

10. Agencement de pédale selon l'une des revendications 1 à 9, **caractérisé en ce que** l'appui de pédale (14) présente, dans la zone de son extrémité libre, un ergot d'actionnement (21), espacé de la pédale (3) non actionnée, ainsi que deux appendices de guidage (26) espacés l'un de l'autre, la pédale (3), lors du pivotement, du fait d'un impact infligé au véhicule, pénétrant entre les appendices de guidage (26)

11. Dispositif muni d'un agencement de pédale selon l'une des revendications 1 à 10, **caractérisé en ce que** le composant (6) solidaire avec la carrosserie est un ensemble moteur-transmission (7) associé à une colonne de direction (8) d'une servo-direction ou un composant fixé sur la colonne de direction (8) et la pédale (3) est une pédale de frein sachant que le bloc de pédale (2) est fixé sur un amplificateur de force de freinage (5), avec interposition de la paroi frontale (4).

12. Dispositif selon la revendication 11, **caractérisé en ce que** l'ergot d'actionnement (21) de l'appui de pédale (14), en cas d'impact infligé au véhicule, agit sur la pédale (3), au dessous d'une zone dans laquelle l'amplificateur de force de freinage (5) est fixé dans la zone de bride (9) sur les joues latérales (24, 25).
